# EUROPEAN PATENT SPECIFICATION

(11) **EP 0 442 712 B1**
(45) Date of publication and mention of the grant of the patent: **22.05.1996**
(21) Application number: 91301139.1
(22) Date of filing: 13.02.1991
(51) Int. Cl.: G11B 7/09, G11B 7/085, G11B 7/095

(54) **Optical information recording and/or reproducing apparatus**
Optisches Informationsaufzeichnungs- und/oder Wiedergabegerät
Appareil d'enregistrement et/ou de reproduction d'informations optique

(30) Priority: 16.02.1990 JP 33887/90
(43) Date of publication of application: 21.08.1991
(73) Proprietor: CANON KABUSHIKI KAISHA, Tokyo (JP)
(72) Inventor: Sato, Mikio, c/o Canon Kabushiki Kaisha, Ohta-ku, Tokyo (JP)
(74) Representative: Beresford, Keith Denis Lewis

(56) References cited:
- EP-A- 0 138 273
- EP-A- 0 261 916
- DE-A- 3 620 301
- DE-A- 3 641 587
- DE-A- 3 643 572
- FR-A- 2 544 535

## Description

### BACKGROUND OF THE INVENTION

### Field of the Invention

The present invention relates to an optical information recording and reproducing apparatus for recording and/or reproducing information by using a light beam.

### Related Background Art

An optical disk drive which uses an optical disk as a recording medium has been recently attracting notice as an external storage for a computer. In such an optical disk, record tracks are formed spirally or concentrically, and information is recorded on the tracks as record pits. Since a pitch of the tracks is usually 1 - 2 µm to provide a high recording density, the optical disk drive may be used as a large capacity storage.

In order to record information on an optical disk or reproduce the information recorded on the optical disk, an optical head for irradiating a laser beam to the optical disk is used. The optical head comprises a semiconductor laser which emits a laser beam and an objective lens actuator which adjusts irradiation status of the laser beam to the optical disk (at least one of focusing and tracking), and it controls the drive of the optical head by controlling the objective lens actuator so that the laser beam is irradiated to a target track on the optical disk.

In order to control the optical head, a high gain and wide band servo system is required, but it is extremely difficult to attain sufficient stability in such a high gain and wide band servo system. Where the servo system comprises a digital control circuit, it is much more difficult to attain the sufficient stability than in an analog control circuit because of a waste time due to an operation time for the control or a phase turn-around in a high frequency range due to a zero-order holder.

In order to solve the above problems, it has been proposed to construct a control system by building in a repetition compensator which uses a shift register. The repetition compensator has many shift register stages as the number of times of sampling in one period in one rotation of the disk and stores a servo error signal for each sampling. At each sampling, it produces the servo error signal of the previous sampling and adds the output signal and a current servo error signal to cancel a periodic variation due to the eccentricity of the disk. This will be discussed in detail later. Thus, since the repetition compensator has a high tracking characteristic to the target, a gain of the digital stabilization compensator which produces the control signal for the objective lens actuator can be significantly reduced. As a result, the control system is stabilized, a higher gain is attained than a system without the repetition compensator, and the tracking characteristic is improved.

However, in the prior art, since the sampling frequency of the repetition compensator and the digital stabilization compensator are set to the same value, it includes the following problems. A frequency band required for the repetition compensator is several times as high as a rotation frequency of the disk. Since a normal rotation frequency of the disk is about 50 Hz, an upper limit of the required frequency band is approximately several hundreds Hz. On the other hand, a frequency band required for the digital stabilization compensator is up to several KHz. Thus, if the sampling frequencies of both compensators are to be set equally, they should be set to several tens KHz which conforms to the sampling frequency of the digital stabilization compensator while taking into account the fact that the sampling frequency of the digital control system usually requires ten times as high as the frequency band. As a result, the number of stages of the shift register which stores the servo error signals of the rotation period of the disk increases and the circuit configuration becomes extremely complex.

Assuming that the rotation frequency of the disk is 50 Hz (3,000 rpm), the frequency band required for the repetition compensator may be approximately ten times as high as the fundamental frequency which is the rotation frequency of the disk, and the sampling frequency of the repetition compensator may be approximately ten times as high as the frequency band of the repetition compensator, that is, approximately 5 KHz. Where the sampling frequency of the repetition compensator is 5 KHz, the number of stages of the shift register is 100.

On the other hand, if the sampling frequencies of the repetition compensator and the digital stabilization compensator are set equally, the sampling frequency of the repetition compensator is several tens KHz. For example, when the sampling frequency of the repetition compensator is 50 KHz, the number of stages of the shift register is 1,000, which requires ten times as large memory capacity as that required in the previous example. Thus, in the prior art, since the sampling frequencies of the repetition compensator and the digital stabilization compensator are equally set, many shift register stages are used and the circuit configuration of the control system is very complex.

### SUMMARY OF THE INVENTION

In the light of the above, it is an object of the present invention to provide a disk drive which lowers a sampling frequency of a repetition compensator in order to reduce the number of shift registers.

According to the present invention there is provided an information recording/reproducing apparatus for performing recording of information on and/or reproduction of information from a rotating recording medium, which comprises:
activating means for adjusting the position of a light beam incident on the recording medium;
irradiation state error detection means for detecting the light beam reflected or transmitted by the recording medium, and for outputting irradiation state error signals;
a feedback circuit for sampling the irradiation state error signals output from said detection means at a first predetermined sampling rate to generate control signals for said adjusting means in accordance with sampled irradiation state error signals, and for supplying the control signals to said adjusting means; and
sample and hold means for sampling a signal in said feedback circuit in each rotational period of the recording medium at a second predetermined sampling rate, and for adding the sampled signal stored therein to the signal in said feedback circuit,
characterized in that said second predetermined sampling rate is set lower than said first predetermined sampling rate.

### BRIEF DESCRIPTION OF THE DRAWINGS

Fig. 1 shows a block diagram of one embodiment of an optical information recording and reproducing apparatus of the present invention,
Figs. 2A to 2E show time charts of an operation of the apparatus of Fig. 1,
Fig. 3 shows a block diagram of another embodiment of the optical information recording and reproducing apparatus of the present invention,
Fig. 4 shows a characteristic chart of a change in a servo error signal to the rotation of a recording medium in the optical information recording and reproducing apparatus of the present invention.

### DETAILED DESCRIPTION OF THE PREFERRED EMBODIMENTS

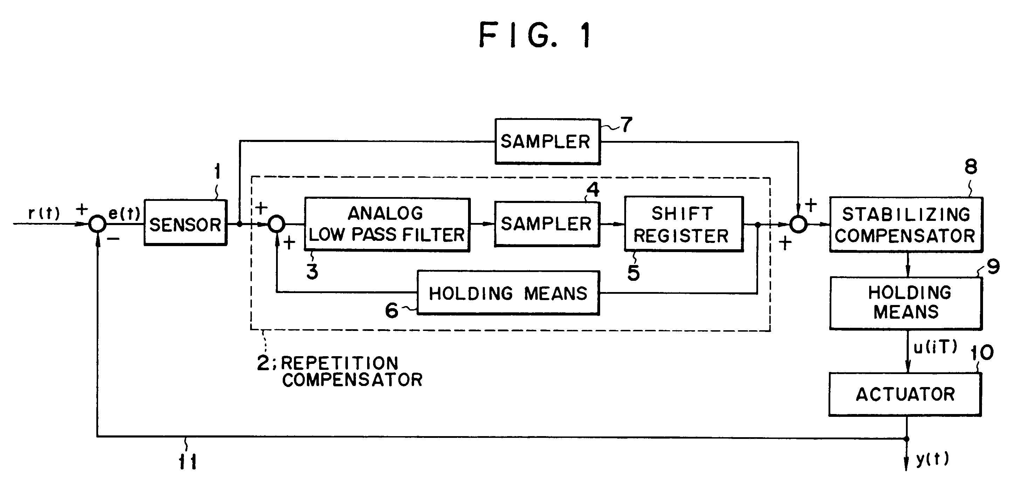

Embodiments of the present invention are now explained with reference to the accompanying drawings. Fig. 1 shows a block diagram of one embodiment of the optical information recording and reproducing apparatus of the present invention. In the following embodiment, a tracking servo control is specifically discussed.

In Fig. 1, numeral 1 denotes a sensor for detecting a servo error signal which indicates a positional error between a target track on a recording medium and an irradiation spot of a laser beam (hereinafter referred to as a laser spot). A detection method may be a conventional push-pull method. The sensor 1 calculates a difference between a laser spot target r(t) and an actual actuator position y(t) to produce the servo error signal e(t) which is error information for the target track.

Numeral 2 denotes a repetition compensator which comprises an analog low-pass filter 3, a sampler 4 including an A/D converter, a shift register 5 and holding means 6 including a D/A converter. The sampler 4 samples the servo error signals at a predetermined rate in one period during which the recording medium rotates one revolution. The servo error signals sampled by the sampler 4 are stored in the shift register 5. Accordingly, the shift register 5 has as many stages as the number of times of sampling in one-rotation period of the recording medium.

Numeral 7 denotes a sampler which comprises an A/D converter, and it samples the servo error signals at a predetermined rate. As described above, the sampling frequency requires at least several tens KHz while the sampling frequency of the repetition compensator 2 is set to one quarter of the sampling frequency of the sampler 7. Because of the reduction of the sampling frequency, the number of stages of the shift register 5 is reduced accordingly. A digital stabilization compensator 8 calculates a control amount to an actuator 10 at the sampling frequency of the sampler 7. Numeral 9 denotes holding means which comprises a D/A converter, and numeral 10 denotes an object lens actuator which is controlled by the control signal of the digital stabilization compensator 8 as described above. A control result of the actuator 10 is fed back to an input circuit through a feedback loop 11. The object lens actuator 10 is controlled in accordance with an error from the input signal such that the laser spot is moved to the target track.

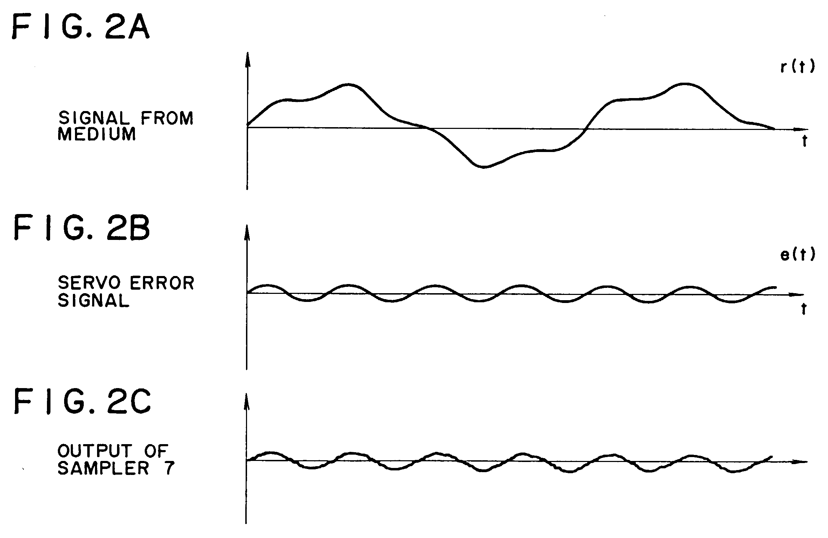

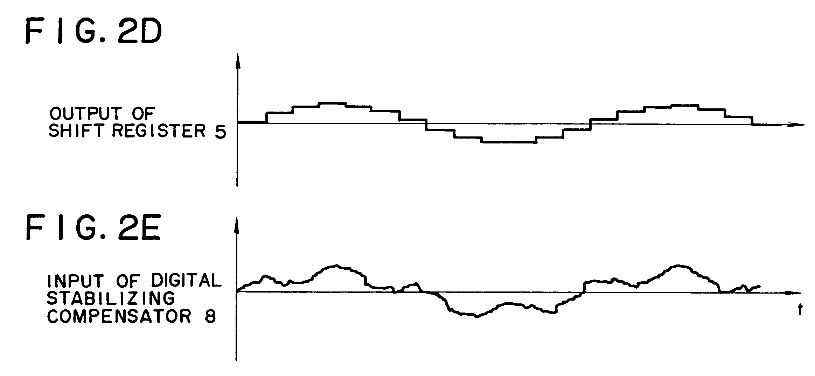

A specific operation of the present embodiment is now explained with reference to Fig. 2.

Fig. 2A shows the target value r(t) to be followed. The signal r(t) includes a rotation frequency and frequency components which are multiples of the rotation frequency, due to the eccentricity of the recording medium. Fig. 2B shows the deviation e(t) between r(t) and the actual actuator position y(t). The signal e(t) is detected by the sensor 1, and outputted from the sensor 1 as a servo error signal.

Fig. 2C shows an output signal of the sampler 7, and Fig. 2D shows an output signal of the shift register 5. As described above, the shift register 5 stores the servo error signals at the predetermined rate in one-rotation period of the recording medium. The number of stages of the shift register 5 is set to the number of times of sampling of the sampler 4 in one-rotation period of the recording medium. Accordingly, the shift register 5 sequentially stores the servo error signals at each sampling by the sampler 4 and sequentially outputs the servo error signals of one-period earlier. The sampling frequency of the sampler 4, that is, the sampling frequency f₂ of the repetiton compensator 2 is set lower than the sampling frequency f₁ of the digital stabilization compensator 8. In the present embodiment, the ratio of f₂/f₁ is 1/4. The sampling frequency of the digital stabilization compensator 8 is the sampling frequency of the sampler 7.

Fig. 2E shows a sum signal of the output of the shift register 5 and the output of the sampler 7. The digital stabilization compensator 8 calculates the control amounts for the objective lens actuator 10 based on the sum output in accordance with a predetermined formula at each sampling by the sampler 7 so that the laser spot follows the target track. As described above, the signal r(t) from the recording medium includes the rotation frequency of the recording medium and the frequency components which are multiples of the rotation frequency, which deteriorate the tracking characteristic of the laser spot to the track. The shift register 5 holds one period of servo error signals and sequentially outputs the servo error signals of one period earlier. By reflecting the servo signals of one period earlier, the periodic disturbance due to the eccentricity of the recording medium is suppressed and the tracking ability of the laser spot is enhanced. In the present embodiment, the sampling frequency of the repetition compensator is set to 1/4 of that of the digital stabilization compensator as described above, but the tracking ability of the laser spot is substantially same as that when the sampling frequencies of both compensator are set equally.

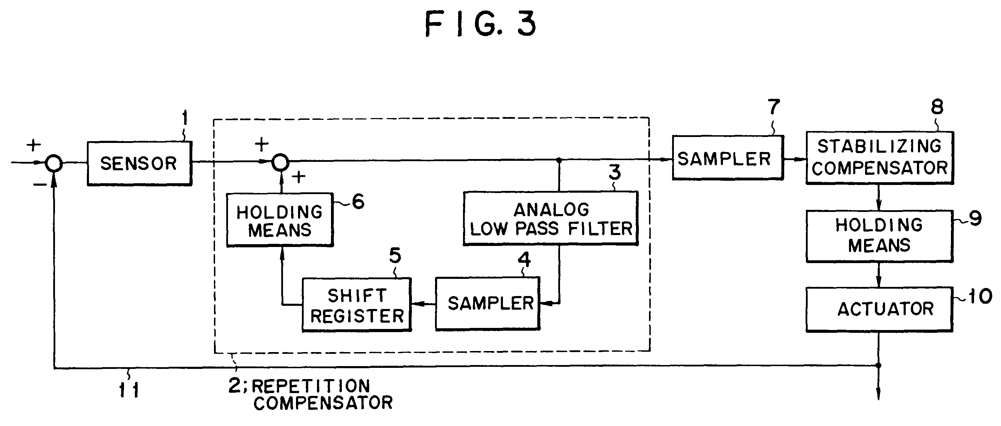

Fig. 3 shows a block diagram of another embodiment. In the present embodiment, an internal connection of the repetition compensator 2 has been modified so that the analog low-pass filter 3, the sampler 4, the shift register 5 and the holding means 6 are connected in series. The output of the holding means 6 is added to the servo error to be inputted to the sampler 7. Like in the previous embodiment, the shift register 5 sequentially stores the servo error signals at each sampling time which is set by the sampler 4. It also outputs the sampled values of one period earlier at each sampling time for the addition to the servo error signal to be inputted to the sampler 7 so that the periodic disturbance due to the eccentricity of the recording medium is suppressed.

In the present embodiment, the sampling frequency of the repetition compensator 2 is again set lower than the sampling frequency of the digital stabilization compensator 8. Thus, in the present embodiment, the capacity of the shift register 5 can be reduced and the same effect as that in the previous embodiment is attained.

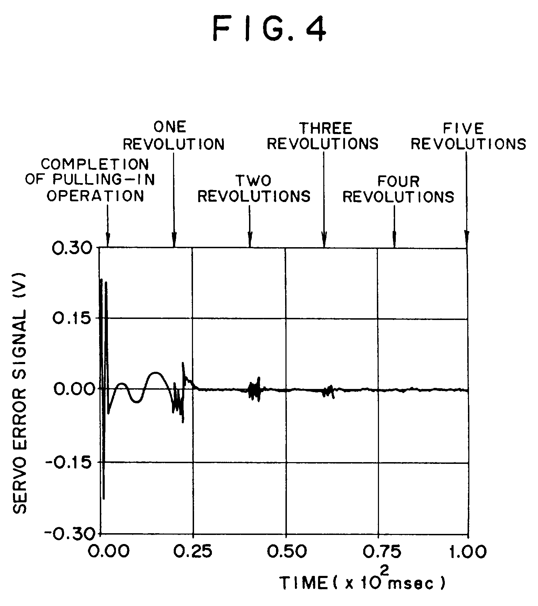

An experiment result is now explained. According to a simulation test by the inventors, a result shown in Fig. 4 was obtained. Fig. 4 shows a characteristic chart of measurement of change in the servo error signal to the number of rotations (time) of the recording medium. Condition of the experiment are that the ratio f₂/f₁ of the sampling frequency f₂ of the repetition compensator and the sampling frequency f₁ of the digital stabilization compensator is 1/5, and the initial value of the shift register is all-zero. As seen from Fig. 4, the servo error signal is substantially zero after the second rotation of the recording medium. This indicates that the laser spot and the target track coincide and the laser spot well tracks the target track. The servo error signal is not zero at the first rotation of the recording medium after the pull-in of the servo error signal. This is due to the fact that the initial value of the shift register has been set to zero. Accordingly, a steady error of the rotation frequency and the frequency components which are multiples of the rotation frequency remains only in the first rotation of the recording medium but this does not raise any practical problem. Where the sampling frequency f₂ of the repetition compensator is set to 1/5 of the sampling frequency f₁ of the digital stabilization compensator so that the capacity of the shift register is reduced to 1/5, the control system operates equally well as the control system having the ratio f₂/f₁ of 1.

In accordance with the present invention, the sampling frequency of the repetition compensator is set lower than that of the digital stabilization compensator. As a result, the capacity of the shift register used in the repetition compensator can be effectively reduced without any affect to the control operation. Accordingly, the circuit configuration of the apparatus is simplified and the reduction of size and cost of the apparatus is attained.

While the tracking servo control is explained in the above embodiments, the present invention is applicable to not only the tracking servo control but also the focusing servo control and the servo control of a spindle motor which drives the recording medium.

## Claims

1. An information recording apparatus for performing recording of information on a rotating recording medium or an information reproducing apparatus for performing reproduction of information from a rotating recording medium, or an information recording and reproducing apparatus for performing recording of information on and reproducing of information from a rotating recording medium, which comprises:
activating means (10) for adjusting the position of a light beam incident on the recording medium;
irradiation state error detection means (1) for detecting the light beam reflected or transmitted by the recording medium, and for outputting irradiation state error signals;
a feedback circuit (1, 7, 8, 9, 10) for sampling the irradiation state error signals output from said detection means (1) at a first predetermined sampling rate (f₁) to generate control signals for said adjusting means (10) in accordance with sampled irradiation state error signals, and for supplying the control signals to said adjusting means (10); and
sample and hold means (3, 4, 5, 6) for sampling a signal in said feedback circuit (1, 7, 8, 9, 10) in each rotational period of the recording medium at a second predetermined sampling rate (f₂), and for adding the sampled signal stored therein to the signal in said feedback circuit (1, 7, 8, 9, 10),
characterized in that said second predetermined sampling rate (f₂) is set lower than said first predetermined sampling rate (f₁).

2. An apparatus according to claim 1, wherein said second predetermined sampling rate (f₂) is substantially between 1/4 to 1/5 of said first predetermined sampling rate (f₁).

3. An apparatus according to either of the preceding claims in which the irradiation state error signals comprise beam tracking error signals.

4. An apparatus according to any one of the preceding claims in which the irradiation state error signals comprise focusing error signals.

## Patentansprüche

1. Informationsaufzeichnungsgerät zur Aufzeichnung von Informationen auf ein sich drehendes Aufzeichnungsmedium oder Informationswiedergabegerät zur Wiedergabe von Informationen von einem sich drehenden Aufzeichnungsmedium, oder Informationsaufzeichnungs- und Wiedergabegerät zur Aufzeichnung von Informationen auf ein sich drehendes Aufzeichnungsmedium und Wiedergabe von Informationen von einem sich drehenden Aufzeichnungsmedium, mit:
einer Justiereinrichtung (10) zum Justieren der Position eines auf das Aufzeichnungsmedium auftreffende Lichtstrahls; einer Ausstrahlungszustandsfehler-Erfassungseinrichtung (1) zur Erfassung des von dem Aufzeichnungsmedium reflektierten oder durchgelassenen Lichtstrahls und zur Ausgabe von Ausstrahlungszustandsfehlersignalen;
einer Rückkopplungsschaltung (1, 7, 8, 9, 10) zur Abtastung der von der Erfassungseinrichtung (1) ausgegebenen Ausstrahlungszustandsfehlersignale mit einer ersten vorgegebenen Abtastfrequenz (f₁) zur Erzeugung von Steuersignalen für die Justiereinrichtung (10) in Übereinstimmung mit abgetasteten Ausstrahlungszustandsfehlersignalen und zur Zuführung der Steuersignale zu der Justiereinrichtung (10); und
einer Abtast-Halte-Einrichtung (3, 4, 5, 6) zur Abtastung eines Signals in der Rückkopplungsschaltung (1, 7, 8, 9, 10) in jeder Rotationsperiode des Aufzeichnungsmediums mit einer zweiten vorgegebenen Abtastfrequenz (f₂), und zum Addieren des darin gespeicherten abgetasteten Signals zu dem Signal in der Rückkopplungsschaltung (1, 7, 8, 9, 10),
**dadurch gekennzeichnet, daß**
die zweite vorgegebene Abtastfrequenz (f₂) niedriger eingestellt ist als die erste vorgegebene Abtastfrequenz (f₁).

2. Gerät nach Anspruch 1, wobei die zweite vorgegebene Abtastfrequenz (f₂) im wesentlichen zwischen 1/4 und 1/5 der ersten vorgegebenen Abtastfrequenz (f₁) liegt.

3. Gerät nach Anspruche 1 oder 2, wobei die Ausstrahlungszustandsfehlersignale Strahl-Spurführungsfehlersignale enthalten.

4. Gerät nach einem der vorhergehenden Ansprüche, wobei die Ausstrahlungszustandsfehlersignale Fokussierungsfehlersignale enthalten.

## Revendications

1. Appareil d'enregistrement d'informations pour effectuer un enregistrement d'informations sur un support d'enregistrement en rotation, ou appareil de reproduction d'informations pour effectuer une reproduction d'informations à partir d'un support d'enregistrement en rotation, ou appareil d'enregistrement et de reproduction d'informations pour effectuer un enregistrement d'informations sur, et reproduire des informations à partir d'un support d'enregistrement en rotation, qui comprend:
un moyen (10) d'activation pour ajuster la position d'un faisceau lumineux incident sur le support d'enregistrement;
un moyen (1) de détection d'erreur d'état d'exposition pour détecter le faisceau lumineux réfléchi ou transmis par le support d'enregistrement, et pour fournir en sortie les signaux d'erreur d'état d'exposition;
un circuit (1, 7, 8, 9, 10) à rétroaction pour échantillonner la sortie de signaux d'erreur d'état d'exposition provenant dudit moyen (1) de détection à une première fréquence (f₁) d'échantillonnage prédéterminée afin de générer des signaux de commande destinés audit moyen (10) d'ajustement en fonction de signaux d'erreur d'état d'exposition échantillonnés, et pour fournir les signaux de commande audit moyen (10) d'ajustement; et
un moyen (3, 4, 5, 6) échantillonneur-bloqueur pour échantillonner un signal dans ledit circuit (1, 7, 8, 9, 10) à rétroaction, au cours de chaque période de rotation du support d'enregistrement à une seconde fréquence (f₂) d'échantillonnage prédéterminée, et pour additionner le signal échantillonné stocké dans celui-ci, au signal dudit circuit (1, 7, 8, 9, 10) à rétroaction,
caractérisé en ce que ladite seconde fréquence (f₂) d'échantillonnage prédéterminée est fixée de façon à être inférieure à ladite première fréquence (f₁) d'échantillonnage prédéterminée.

2. Appareil selon la revendication 1, dans lequel ladite seconde fréquence (f₂) d'échantillonnage prédéterminée est sensiblement comprise entre 1/4 et 1/5 de ladite première fréquence (f₁) d'échantillonnage prédéterminée.

3. Appareil selon l'une quelconque des revendications précédentes, dans lequel les signaux d'erreur d'état d'exposition comprennent les signaux d'erreur de poursuite de faisceau.

4. Appareil selon l'une quelconque des revendications précédentes, dans lequel les signaux d'erreur d'état d'exposition comprennent des signaux d'erreur de focalisation.
